# EUROPEAN PATENT SPECIFICATION

(11) **EP 3 884 806 B1**
(45) Date of publication and mention of the grant of the patent: **11.05.2022**
(21) Application number: 20201993.1
(22) Date of filing: 15.10.2020
(51) Int. Cl.: A45C 11/00, A45C 13/00, A45C 13/10, B62J 9/20

(54) **WATERPROOF OUTDOOR BAG FOR MOBILE PHONE STORAGE WITH TOUCH OPERATION**
WASSERDICHTE AUSSENTASCHE ZUR AUFBEWAHRUNG VON MOBILTELEFONEN MIT BERÜHRUNGSBEDIENUNG
SAC D'EXTÉRIEUR ÉTANCHE POUR RANGEMENT DE TÉLÉPHONE MOBILE À FONCTIONNEMENT TACTILE

(30) Priority: 23.03.2020 CN 202010208668
(43) Date of publication of application: 29.09.2021
(73) Proprietor: Fang, Songke, Donglong Huilai County, Guangdong 515226 (CN)
(72) Inventor: Fang, Songke, Donglong Huilai County, Guangdong 515226 (CN)
(74) Representative: Zaboliene, Reda

(56) References cited:
- CN-U- 208 064 676
- US-A1- 2011 101 059
- US-A1- 2014 054 335

## Description

### INCORPORATION BY REFERENCE

This application claims priority to Chinese Patent Application 202010208668.0, filed on March 23, 2020.

### FIELD OF THE DISCLOSURE

The disclosure relates to the field of storage bags, in particular to a waterproof outdoor bag for mobile phone storage with touch operation.

### BACKGROUND

Cycle bag is a kind of storage bag usually fixed on bicycles, motorcycles and other vehicles, which can easily hold water bottles, mobile phones, wallets and other items for users to use. After putting the mobile phone into the traditional cycle bag, the mobile phone cannot be operated, which is inconvenient to use, and the cycle bag is difficult to disassemble after being assembled on a bicycle, motorcycle, and other vehicles.

A positioning buckle is commonly used to make the cycle bag easy to disassemble. The traditional cycle bag has an opening stitched with a transparent plastic film, and the mobile phone can be operated through the transparent plastic film. However, since the transparent plastic film is stitched to the cycle bag, when it rains, rainwater easily seeps into the cycle bag from the stitched position. Traditional cycle bags are generally made of ethylene vinyl acetate (EVA) foam materials, having poor waterproof effect, and are easy to suffer from water damage when exposed to rain for a long time.

Patent application US20110101059A1 describes a similar outdoor bag that comprises a socket for a mobile phone that is formed by stitching/sewing material to the top wall of the body. This outdoor bag also contains a transparent plastic film and means of attachment that are sewn/stitched to the walls of the outdoor bag. The invention described in this patent application, on the other hand, is made by welding means of attachment to the outside of the outdoor bag and welding transparent plastic film to the window of the top body. The top body itself described in this application including the cavity for mobile phone is formed by injection molding.

### SUMMARY

In order to improve the above-mentioned deficiencies, the present disclosure provides a technical solution for solving the problems.

The disclosure provides a waterproof outdoor bag for mobile phone storage with touch operation, which includes a storage bag main body inclusing a top bag body, a bottom bag body and a zipper. The upper side of the bottom bag body is stitched with a soft positioning tape of the zipper, and the upper side of the soft positioning tape of the zipper and the lower side of the top bag body stitched are to each other. Two ends of the zipper are stitched one-to-one correspondingly to the left and right sides of the soft positioning tape of the zipper, and the storage bag main body is opened and closed by the zipper between the top bag body and the bottom bag body. An opening for the mobile phone screen is formed in a middle of the top bag body, and the top bag body is integrally formed by injection molding. A soft transparent plastic film is welded at the opening for the mobile phone screen, and the soft transparent plastic film seals the opening for the mobile phone screen. An inner side of the top bag body forms a placement position for a mobile phone, and the inner side of the top bag body is welded with fixing belts for the mobile phone. The fixing belts are set on sides of the opening for the mobile phone screen.

As a further solution of the present disclosure, the fixing belts includes two fixing belts, and the two fixing belts are set up and down separately. An upper end of an upper belt of the two fixing belts is welded at an upper side of the opening, and a lower end of a lower belt of the two fixing belts is welded at a lower side of the opening. A detachable connection is formed between the two fixing belts.

As a further solution of the present disclosure, the upper belt is equipped with a sub-Velcro at a back, and the lower belt is equipped with a main-Velcro at a front. The detachable connection is formed by the sub-Velcro and the main-Velcro between the two fixing belts.

As a further solution of the present disclosure, the top bag body is formed with a positioning groove of the soft transparent plastic film on a side of the opening, the positioning groove is inside the top bag body, and an edge of the soft transparent plastic film is welded in the positioning groove of the soft transparent plastic film.

As compared to prior art, the present disclosure has the following beneficial effects: the placement position formed on the inner side of the top bag body is to hold the mobile phone, and the top bag body is integrally formed by injection molding, which can effectively waterproof. The soft transparent plastic film is welded in the positioning groove of the plastic film on the side of the opening for the mobile phone screen, and the welded part can be effectively waterproof. The mobile phone is fixed by connecting the upper and lower fixing belts, so that the mobile phone is always placed in the placement position of the top bag body. The mobile phone screen is close to the soft transparent plastic film, which is convenient to operate the mobile phone. When the main body of the storage bag is exposed to rain for a long time, the rainwater will partially penetrate into the bottom bag body, However, the placement position of the mobile phone on the top bag body can be kept dry, so that the mobile phone will not be exposed to water.

The additional aspects and advantages of the present disclosure the fixing belts comprises two fixing belts will be partly introduced in the following description, and partly will become obvious from the following description, or be understood through the practice of the present disclosure.

### BRIEF DESCRIPTION OF DRAWINGS

In order to explain the technical solutions of the present disclosure or the prior art more clearly, accompanying drawings of the embodiments or the prior art will be described in brief below. It is obvious that the below described drawings only relate to some embodiments of the present disclosure. Those skilled in the art can also obtain other drawings based on these drawings without creative work.
Fig. 1 is a schematic structural diagram of the disclosure.
Fig. 2 is a schematic structural diagram of the disclosure from another perspective.

As is shown in the figures: 1. storage bag main body; 1-1. top bag body; 1-2. bottom bag body; 1-3. zipper; 2. soft positioning tape of zipper; 3. opening for mobile phone screen; 4. soft transparent plastic film; 5. Mobile phone placement position; 6. fixing belts for mobile phones; 7. sub-Velcro; 8. main-Velcro; 9. positioning groove of plastic film; 10. reinforced chamfers; and 11. positioning buckle of bag body.

### DETAILED DESCRIPTION

The technical solutions in the embodiments of the present disclosure will be clearly and completely described below in conjunction with the accompanying drawings. Obviously, the described embodiments are only a part of the embodiments of the present disclosure, rather than all the embodiments. All other embodiments obtained by those skilled in the art based on the embodiments of the present disclosure without creative work shall fall into the protection scope of the present disclosure.

In order to improve the above-mentioned deficiencies, the present disclosure provides a technical solution for solving the problems.

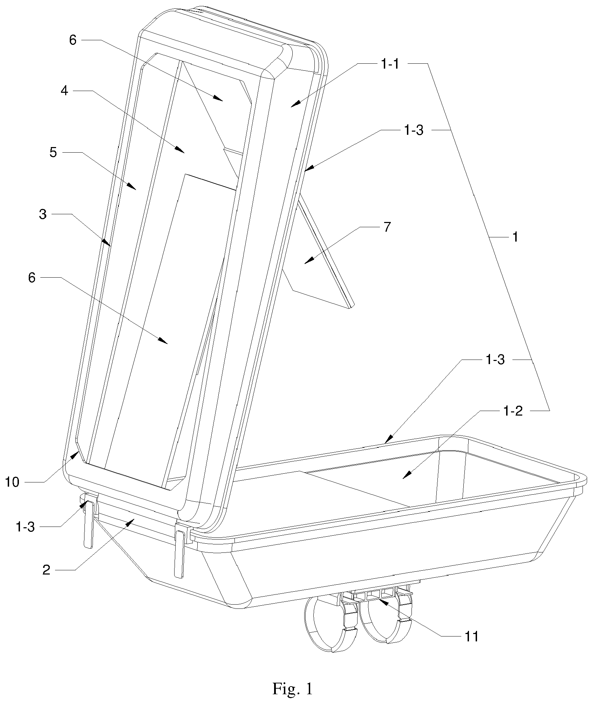

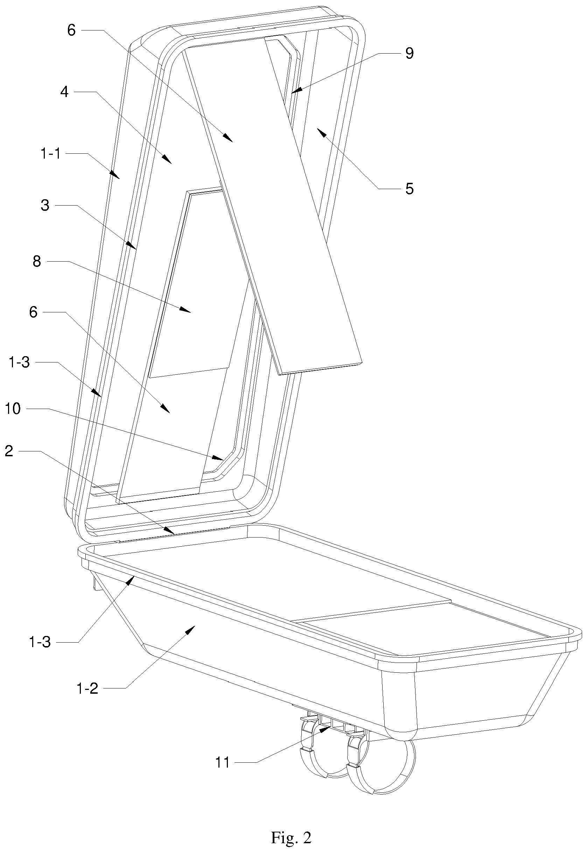

Referring to Figs. 1-2, the disclosure provides a waterproof outdoor bag for mobile phone storage with touch operation, which includes a storage bag main body 1 including a top bag body 1-1, a bottom bag body 1-2, and a zipper 1-3. The upper side of the bottom bag body 1-2 is stitched with a soft positioning tape 2 of the zipper 1-3. The upper side of the soft positioning tape 2 of the zipper 1-3 and the lower side of the top bag body 1-1 are stitched to each other. Two ends of the zipper 1-3 are stitched one-to-one correspondingly to the left and right sides of the soft positioning tape 2 of the zipper 1-3, and the storage bag main body 1 is opened and closed by the zipper 1-3 between the top bag body 1-1 and the bottom bag body 1-2. An opening 3 of the mobile phone screen is formed in the middle of the top bag body 1-1. The top bag body 1-1 is integrally formed by injection molding, and soft transparent plastic film 4 is welded at the opening 3 of the mobile phone screen. The soft transparent plastic film 4 seals the opening 3 of the mobile phone screen, and an inner side of the top bag body 1-1 forms a placement position 5 for mobile phones. The inner side of the top bag body 1-1 is also welded with fixing belts 6 for mobile phones, and the fixing belts 6 are set on the sides of the opening 3 of the mobile phone screen. The principle of the disclosure is as follows: put the mobile phone in the placement position 5 and fix the mobile phone with the fixing belts 6 to keep the mobile phone always in the placement position 5. The mobile phone screen is close to the inner side of the soft transparent plastic film 4, which is convenient to operate the mobile phone. The top bag body 1-1 is integrally formed by injection molding, which can effectively waterproof. When it rains, some rainwater will penetrate into the bottom bag body 1-2. However, the top bag body 1-1 can be effectively waterproof, and the storage bag main body 1 is assembled upright. The rainwater penetrating into the bottom bag body 1 -2 will not enter the placement position 5, so that the inside of the placement position 5 can be kept dry. The edge of the soft transparent plastic film 4 is welded to the inside of the opening 3 of the mobile phone screen by any one of heating-extrusion or ultrasonic heating-extrusion.

As a further solution of the present disclosure, the two fixing belts 6 are set up and down separately. The upper end of the upper fixing belt 6 is welded at the upper side of the opening 3, the lower end of the lower fixing belt 6 is welded at the lower side of the opening 3, and a detachable connection is formed between the two belts 6, such that the mobile phones can be assembled more firmly and position can be more accurate.

As a further solution of the present disclosure, the upper fixing belt 6 is equipped with a sub-Velcro 7 (i.e., latch-and-hook) at the back, the lower fixing belt 6 is equipped with a main-Velcro 8 at the front, and a detachable connection is formed by the sub-Velcro 7 and the main-Velcro 8 between the two belts 6, which is convenient for the assembly and disassembly.

As a further solution of the present disclosure, the top bag body 1-1 is formed with a positioning groove 9 of the plastic film on the side of the opening 3, the positiong groove 9 is inside the top bag body 1-1, and the edge of the soft transparent plastic film 4 is welded in the positioning groove 9 of the plastic film for positioning of welding, which is convenient for processing and production. The position is more accurate, and the efficiency of welding production is accelerated.

As a further solution of the present disclosure, reinforced chamfers 10 are formed at four corners of the opening 3 of the mobile phone screen; which increases the strength of the top bag body 1-1, and the storage bag main body 1 is not easily deformed and damaged when impacted.

As a further solution of the present disclosure, the bottom bag body 1-2 is equipped with a positioning buckle 11 of the bag body at the bottom.

As a further solution of the present disclosure, the top bag body 1-1 is made of polyvinyl chloride (PVC) plastic or thermoplastic polyurethane (TPU) plastic in an integrative molding way, which can effectively waterproof. The bottom bag body 1-2 is integrally formed of EVA foamed rubber and plastic material, which is convenient for processing and production.

Specific application 1: The storage bag main body 1 is assembled on vehicles such as bicycles and motorcycles by the positioning buckle 11 of the bag body, which is equivalent to the front bag of vehicles such as bicycles and motorcycles.

Specific application 2: The storage bag main body 1 is assembled on clothes, furniture, walls, etc. by the positioning buckle 11 of the bag body, which is equivalent to a storage bag.

The working principle of the disclosure is that, the placement position 5 formed on the inner side of the top bag body 1-1 hold the mobile phone. The top bag body 1-1 is integrally formed by injection molding, which can effectively waterproof, and the soft transparent plastic film 4 is welded in the positioning groove 9 of the plastic film on the side of the opening 3 of the mobile phone screen. The welded part can be effectively waterproof, the placement position 5 of the mobile phone in the top bag body 1-1 can be kept dry, and the mobile phone will not be exposed to water due to rain.

## Claims

1. A waterproof outdoor bag for mobile phone storage with touch operation, comprising:
a storage bag main body (1) comprising a top bag body (1-1), a bottom bag body (1-2) and a zipper (1-3), wherein:
an upper side of the bottom bag body (1-2) is stitched with a positioning tape of the zipper (2),
an upper side of the positioning tape of the zipper (2) and a lower side of the top bag body (1-1) are stitched to each other,
two ends of the zipper (1-3) are stitched one-to-one correspondingly to a left side and a right side of the positioning tape of the zipper (2),
the storage bag main body (1) is opened and closed by the zipper (1-3) between the top bag body (1-1) and the bottom bag body (1-2),
an opening for a mobile phone screen (3) is formed in a middle of the top bag body (1-1),
the top bag body (1-1) is integrally formed by injection molding,
a transparent plastic film (4) is welded at the opening for the mobile phone screen (3),
the transparent plastic film (4) seals the opening for the mobile phone screen (3),
an inner side of the top bag body (1-1) forms a placement position for a mobile phone,
the inner side of the top bag body (1-1) is welded with fixing belts (6) for the mobile phone, and
the fixing belts (6) are set on sides of the opening for the mobile phone screen (3).

2. The waterproof outdoor bag for mobile phone storage with touch operation of claim 1, wherein:
the fixing belts (6) comprises two fixing belts,
the two fixing belts (6) are set up and down separately,
an upper end of an upper belt (6) of the two fixing belts is welded at an upper side of the opening (3),
a lower end of a lower belt (6) of the two fixing belts is welded at a lower side of the opening (3), and
a detachable connection is formed between the two fixing belts.

3. The waterproof outdoor bag for mobile phone storage with touch operation of claim 2, wherein:
the upper belt (6) is equipped with a sub-Velcro (7) at a back,
the lower belt (6) is equipped with a main-Velcro (8) at a front, and
the detachable connection is formed by the sub-Velcro (7) and the main-Velcro (8) between the two fixing belts (6).

4. The waterproof outdoor bag for mobile phone storage with touch operation of claim 1, wherein:
the top bag body (1-1) is formed with a positioning groove of the transparent plastic film (9) on a side of the opening (3),
the positioning groove (9) is inside the top bag body (1-1), and
an edge of the transparent plastic film (4) is welded in the positioning groove of the transparent plastic film (9).

5. The waterproof outdoor bag for mobile phone storage with touch operation of claim 1, wherein reinforced chamfers (10) are formed at four corners of the opening for the mobile phone screen (3).

6. The waterproof outdoor bag for mobile phone storage with touch operation of claim 1, wherein the bottom bag body (1-2) is equipped with a positioning buckle of the storage bag main body at a bottom (11).

7. The waterproof outdoor bag for mobile phone storage with touch operation of claim 1, wherein the top bag body (1-1) is made of polyvinyl chloride (PVC) plastic or thermoplastic polyurethane (TPU) plastic by integrative molding.

## Patentansprüche

1. Wasserdichte Outdoor-Tasche zur Handyaufbewahrung mit Touch-Bedienung, umfassend:
einen Aufbewahrungsbeutel-Hauptkörper (1), der einen oberen Beutelkörper (1-1), einen unteren Beutelkörper (1-2) und einen Reißverschluss (1-3) umfasst, wobei:
eine Oberseite des unteren Taschenkörpers (1-2) ist mit einem Fixierband des Reißverschlusses (2) vernäht,
eine Oberseite des Positionierungsbandes des Reißverschlusses (2) und eine Unterseite des oberen Taschenkörpers (1-1) miteinander vernäht sind,
zwei Enden des Reißverschlusses (1-3) eins zu eins entsprechend an eine linke Seite und eine rechte Seite des Positionierungsbandes des Reißverschlusses (2) genäht werden,
der Hauptkörper der Aufbewahrungstasche (1) wird durch den Reißverschluss (1-3) zwischen dem oberen Taschenkörper (1-1) und dem unteren Taschenkörper (1-2) geöffnet und geschlossen,
eine Öffnung für einen Mobiltelefonbildschirm (3) ist in einer Mitte des oberen Taschenkörpers (1-1) ausgebildet,
der obere Beutelkörper (1-1) einstückig durch Spritzgießen geformt ist,
an der Öffnung für das Handydisplay (3) ist eine transparente Kunststofffolie (4) angeschweißt,
die transparente Kunststofffolie (4) verschließt die Öffnung für das Handydisplay (3),
eine Innenseite des oberen Taschenkörpers (1-1) eine Ablageposition für ein Mobiltelefon bildet,
die Innenseite des oberen Taschenkörpers (1-1) ist mit Befestigungsgurten (6) für das Mobiltelefon verschweißt, und
die Befestigungsgurte (6) seitlich an der Öffnung für den Handybildschirm (3) angebracht sind.

2. Wasserdichte Outdoor-Tasche zur Aufbewahrung von Mobiltelefonen mit Berührungsbedienung nach Anspruch 1, wobei:
die Befestigungsgurte (6) zwei Befestigungsgurte umfasst,
die beiden Befestigungsgurte (6) werden separat auf- und abgesetzt,
ein oberes Ende eines oberen Riemens (6) der beiden Befestigungsriemen an einer Oberseite der Öffnung (3) angeschweißt ist,
ein unteres Ende eines unteren Riemens (6) der zwei Befestigungsriemen an einer unteren Seite der Öffnung (3) angeschweißt ist, und
zwischen den beiden Befestigungsgurten ist eine lösbare Verbindung ausgebildet.

3. Wasserdichte Outdoor-Tasche zur Aufbewahrung von Mobiltelefonen mit Touch-Bedienung nach Anspruch 2, wobei:
der Obergurt (6) ist hinten mit einem Unterklettverschluss (7) ausgestattet,
der Untergurt (6) ist vorne mit einem Hauptklettverschluss (8) ausgestattet, und
die lösbare Verbindung wird durch den Unterklett (7) und den Hauptklett (8) zwischen den beiden Befestigungsgurten (6) gebildet.

4. Wasserdichte Outdoor-Tasche zur Aufbewahrung von Mobiltelefonen mit Berührungsbedienung nach Anspruch 1, wobei:
der obere Taschenkörper (1-1) mit einer Positionierungsrille des transparenten Kunststofffilms (9) auf einer Seite der Öffnung (3) ausgebildet ist,
die Positionierungsnut (9) innerhalb des oberen Taschenkörpers (1-1) ist, und
ein Rand der transparenten Kunststofffolie (4) in der Positioniernut der transparenten Kunststofffolie (9) verschweißt ist.

5. Wasserdichte Outdoor-Tasche zur Aufbewahrung von Mobiltelefonen mit Berührungsbedienung nach Anspruch 1, wobei an vier Ecken der Öffnung für den Mobiltelefonbildschirm (3) verstärkte Abschrägungen (10) ausgebildet sind.

6. Wasserdichte Outdoor-Tasche zur Aufbewahrung von Mobiltelefonen mit Berührungsbedienung nach Anspruch 1, wobei der untere Taschenkörper (1-2) mit einer Positionierungsschnalle des Aufbewahrungstaschen-Hauptkörpers an einem Boden (11) ausgestattet ist.

7. Wasserdichte Outdoor-Tasche zur Aufbewahrung von Mobiltelefonen mit Berührungsbedienung nach Anspruch 1, wobei der obere Taschenkörper (1-1) aus Polyvinylchlorid (PVC)-Kunststoff oder thermoplastischem Polyurethan (TPU)-Kunststoff durch integratives Formen hergestellt ist.

## Revendications

1. Un sac d'extérieur étanche pour le rangement d'un téléphone portable à commande tactile, comprenant :
un corps principal de sac de rangement (1) comprenant: un corps de sac supérieur (1-1), un corps de sac inférieur (1-2) et une fermeture à glissière (1-3), dans lequel :
un côté supérieur du corps de sac inférieur (1-2) est cousu avec une bande de positionnement de la fermeture à glissière (2),
un côté supérieur de la bande de positionnement de la fermeture à glissière (2) et un côté inférieur du corps de sac supérieur (1-1) sont cousus l'un à l'autre,
deux extrémités de la fermeture à glissière (1-3) sont cousues une à une en correspondance avec un côté gauche et un côté droit de la bande de positionnement de la fermeture à glissière (2),
le corps principal de sac de rangement (1) est ouvert et fermé par la fermeture à glissière (1-3) entre le corps de sac supérieur (1-1) et le corps de sac inférieur (1-2),
une ouverture pour un écran de téléphone portable (3) est formée au milieu du corps de sac supérieur (1-1),
le corps de sac supérieur (1-1) est formé d'un seul tenant par moulage par injection,
un film plastique transparent (4) est soudé au niveau de l'ouverture pour l'écran du téléphone portable (3),
le film plastique transparent (4) obture l'ouverture pour l'écran du téléphone portable (3),
un côté intérieur du corps de sac supérieur (1-1) forme une position de placement pour un téléphone mobile,
le côté intérieur du corps de sac supérieur (1-1) est soudé avec des ceintures de fixation (6) pour le téléphone mobile, et
les ceintures de fixation (6) sont fixées sur les côtés de l'ouverture pour l'écran de téléphone portable (3).

2. Sac d'extérieur étanche pour le rangement d'un téléphone mobile à commande tactile selon la revendication 1, dans lequel :
les courroies de fixation (6) comprennent deux courroies de fixation,
les deux ceintures de fixation (6) sont montées et descendues séparément,
une extrémité supérieure d'une ceinture supérieure (6) des deux ceintures de fixation est soudée sur un côté supérieur de l'ouverture (3),
une extrémité inférieure d'une ceinture inférieure (6) des deux ceintures de fixation est soudée sur un côté inférieur de l'ouverture (3), et
une liaison amovible est formée entre les deux ceintures de fixation.

3. Sac d'extérieur étanche pour le rangement d'un téléphone mobile à commande tactile selon la revendication 2, dans lequel :
la ceinture supérieure (6) est équipée d'un sous-Velcro (7) à l'arrière,
la ceinture inférieure (6) est équipée d'un Velcro principal (8) à l'avant, et
la liaison amovible est formée par le sous-Velcro (7) et le principal-Velcro (8) entre les deux ceintures de fixation (6).

4. Sac d'extérieur étanche pour le rangement d'un téléphone portable à commande tactile selon la revendication 1, dans lequel :
le corps de sac supérieur (1-1) est formé avec une rainure de positionnement du film plastique transparent (9) sur un côté de l'ouverture (3),
la rainure de positionnement (9) est à l'intérieur du corps de sac supérieur (1-1), et
un bord du film plastique transparent (4) est soudé dans la rainure de positionnement du film plastique transparent (9).

5. Sac d'extérieur étanche pour rangement de téléphone mobile à commande tactile selon la revendication 1, dans lequel des chanfreins renforcés (10) sont formés aux quatre coins de l'ouverture pour l'écran du téléphone mobile (3).

6. Sac d'extérieur étanche pour le rangement d'un téléphone mobile à commande tactile selon la revendication 1, dans lequel le corps de sac inférieur (1-2) est équipé d'une boucle de positionnement du corps principal de sac de rangement au niveau d'un fond (11).

7. Sac d'extérieur étanche pour rangement de téléphone portable à fonctionnement tactile selon la revendication 1, dans lequel le corps de sac supérieur (1-1) est réalisé en plastique polychlorure de vinyle (PVC) ou en plastique thermoplastique polyuréthane (TPU) par moulage intégratif.
